# EUROPEAN PATENT APPLICATION

(11) **EP 1 170 689 A1**
(43) Date of publication of application: **09.01.2002**
(21) Application number: 01301402.2
(22) Date of filing: 19.02.2001
(51) Int. Cl.: G06F 17/60

(54) **Device for reading electronic mail**

(30) Priority: 03.07.2000 JP 2000201415
(71) Applicant: FUJITSU LIMITED, Kawasaki-shi, Kanagawa 211-8588 (JP)
(72) Inventor: Sugimoto, Yoshio, c/o Fujitsu Limited, Kawasaki-shi, Kanagawa 211-8588 (JP)
(74) Representative: Mohun, Stephen John

(57) **Abstract**

A device creates a list of electronic mails of which a state is "unread" when a viewer window for displaying a body of the received mail is displayed. When a user inputs a search indication by using a "previous unread mail" or "next unread mail" button displayed in the viewer window, the unread mail corresponding to the indication is specified, and the body of the specified unread mail is displayed in the viewer window.

## Description

The present invention relates to a device for reading electronic mail .

Electronic mail has been increasingly popular as an information transmission method over recent years. The electronic mail can be referred by use of information processing devices such as a workstation (WS), a personal computer (PC), a personal digital assistants (PDA), a mobile computer, an electronic notebook, a word processor, a personal telephone (cell phone) and so on.

The electronic mail is read by use of the information processing device (referred to as an "electronic mail device") for executing a program (which is categorized as electronic mail software, i.e., so-called "mailer") for creating and transmitting the electronic mail and receiving and displaying the electronic mail.

The electronic mail device includes a display for displaying a screen for displaying a list of the electronic mails, a screen for displaying a content of text of the electronic mail, a screen for displaying a folder for sorting and storing the electronic mails, and a viewer screen for displaying the body of the electronic mail by use of functions incorporated into the mailer.

The electronic mails received are distributed to folders in accordance with a fixed rule or by a user's operation. At this time, the electronic mails are sorted out according to a state of "unread" or a state of "already-read". A majority of mailers have a function (an unread mail search function) for reading only the electronic mails in which the state of "unread" is set among the electronic mails received.

The unread mail search function is such that when the user, if a certain electronic mail is specified, inputs a command of "next unread mail", a body of an electronic mail defined as an unread mail next to the electronic mail specified at present is displayed in a predetermined search sequence.

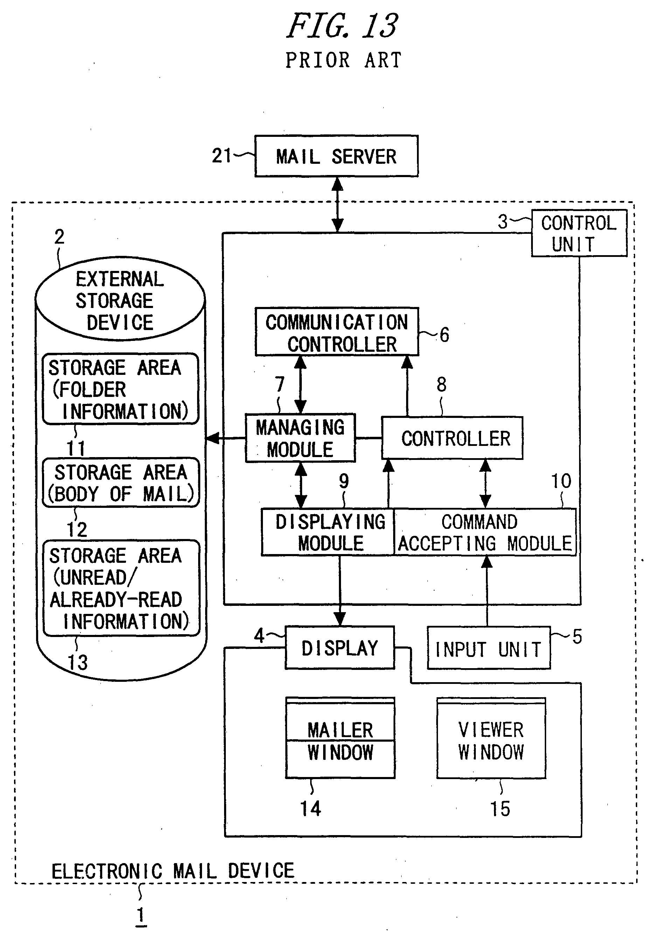

The unread mail search function will be explained referring to FIG. 13. FIG. 13 is an explanatory diagram showing an operation of a typical electronic mail device 1. An information processing device functioning as the electronic mail device 1 includes an external storage device (e.g., a hard disk) 2, a control unit 3, a display 4 and an input unit 5. The electronic mail device 1 is connected via a communication line to a mail server 21.

The control unit 3 implements a communication controller 6, a managing module 7 for managing a mail database, a controller 8 for controlling a mailer, a displaying module 9 and a command accepting module 10. Further, the external storage device 2 has, as databases related to the electronic mails, a storage area 11 for storing pieces of folder information indicating folders configuring the database, a storage area 12 for storing bodies of electronic mails delivered and received, and a storage area 13 for storing pieces of unread/already-read information about the electronic mails stored in the external storage device 2.

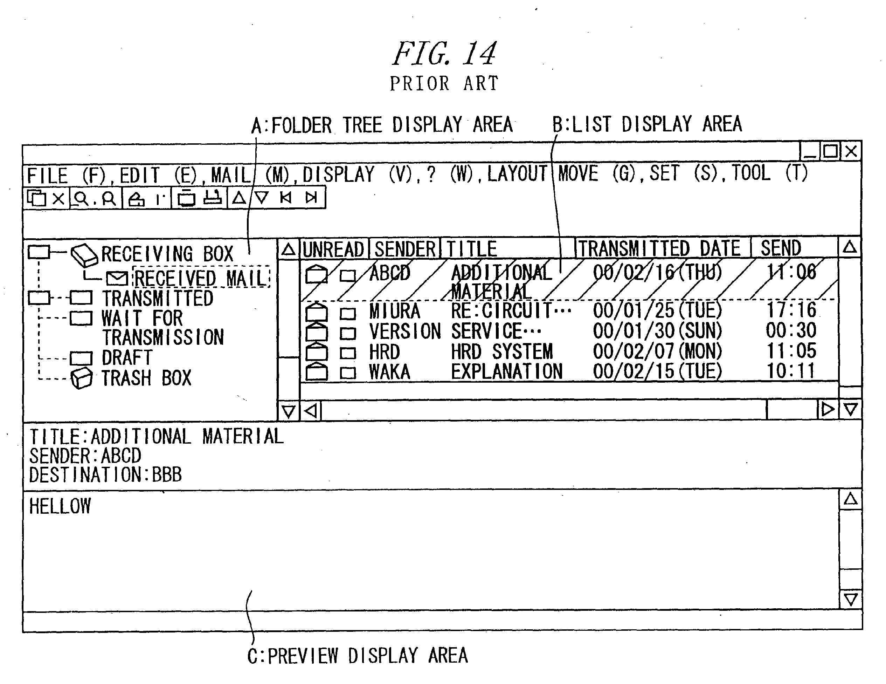

When booting the mailer, the managing module 7 reads out folder information, a body and pieces of unread/already-read information from the storage areas 11, 12 and 13. The displaying module 9 displays a mailer window 14 corresponding to the extracted information on the display 4. FIG. 14 is a diagram showing an example of the mailer window 14. Referring to FIG. 14, the mailer window 14 includes a display area A for displaying a folder tree of the database, a display area B for displaying a list of titles of electronic mails storing in a assigned folder, and a display area C for previewing a body of an electronic mail assigned from the list.

When the user browses the mailer window 14 and specifies (selects) the electronic mail by use of the input unit 5, the command accepting module 10 executes a process of displaying a viewer window (viewer screen) 15. The viewer window 15 is thereby displayed on the display 4, and a body of the selected electronic mail is displayed in the viewer window 15. When the unread mail is displayed in the viewer window 15, the managing module 7 sets, to "already-read", a state of the displayed electronic mail stored in the storage area 13, whereby the state of the electronic mail changes from "unread" into "already-read".

The user, when the viewer window 15 is displayed, is able to input a command of "next unread mail" by using the input unit 5. When this command is input, the storage area 13 is searched, thereby specifying an electronic mail identified with the next unread mail. A body of this electronic mail is read from the storage area 12 and displayed in the viewer window 15 instead of the body of the electronic mail that has been displayed when inputting the command.

Further, in the mailer window 14 shown in FIG. 14, the command of "next unread mail" can be input. When the command of "next unread mail" is input, the body of the unread mail specified by the same process as the above is displayed in the display area C in the mailer window 14 instead of the body of the electronic mail that has been displayed when the command is input.

Further, in one of the mailers, the viewer window 15 is laid out instead of the display area C in the mailer window 14 shown in FIG. 14. The mailer where the mailer window 14 and the viewer window 15 are configured as an integrated window, when the command of "next unread mail" is input during the display of the mailer window 14, displays a body of an electronic mail corresponding to the next unread mail in the viewer window 15 within the mailer window 14.

Further, one of the mailers is such that the mailer window 14 displays only the display area A and the display area B shown in FIG. 14, and, when an electronic mail is specified in the mailer window 14, the viewer window 15 is separately displayed.

However, the above-mentioned electronic mail device has problems as follows: Specifically, the user, when receiving a large number of electronic mails, roughly checks contents of all the electronic mails received, and is thereafter tempted to read again contents of the mail by redisplaying the mails considered important or urgent among those received. Further, when the received electronic mails include a plurality of electronic mails dealing with topics, the user might wish to confirm the contents of these electronic mails by redisplaying. Moreover, the user might want to see again the mail that has been read once or twice before during the process of confirming the plurality of electronic mails received. In this case, the body of the electronic mail which the user wants to see again has already been erased from the viewer window 15, and therefore the user must redisplay the desired electronic mail.

The previously considered electronic mail device, however searches an electronic mail corresponding to the command of "next unread mail" within electronic mails in which the state in the storage area 13 is "unread". The state of the electronic mail in the storage area 13 shifts from "unread" to "already-read" when the electronic mail having a state of "unread" is displayed in the viewer window 15 or the display area C in the mailer window 14.

Therefore, if the user's request occurs in the cases described above, even when inputting the command of "next unread mail", the state of the electronic mail that was already read (the text was displayed) has changed into "already-read", and therefore this mail is ruled out of the search target. Hence, a searching function of the "next unread mail" is incapable of finding the desired electronic mail.

Accordingly, the user, if trying to browse again the electronic mail that has been referred to once, must search the title list in the mailer window 14 and specify the desired electronic mail from the titles of the already-read mails displayed in the list. Alternatively, the user must sequentially search the mails by using a command of "next mail" or a command-of "previous mail". These searching processes are time-consuming, and more time-consuming as the number of the already-read mails increases.

Further, if the user arranges so that only the unread mails are listed up in the list inthe mailer window 14, the electronic mail displayed once is ruled out of the list, so that the process of searching the desired electronic mail in order for the user to redisplay it, becomes far more time-consuming.

Embodiments of the present invention aim to provide an electronic mail device capable of facilitating a mail search process for redisplaying electronic mail referred to once.

According to one aspect of the present invention, a device for reading electronic mails, comprising: a storing unit storing unread/already information corresponding to each of received electronic mails; a managing unit managing an electronic mail setting the state of "unread" at a predetermined timing; and a controller controlling a management of reading of the electronic mail setting the state of "unread" managed by said managing unit.

Preferred embodiments of the present invention will now be described, by way of example only, with reference to the accompanying drawings, in which:
FIG. 1 is a block diagram showing functions of an electronic mail device in an embodiment of the present invention;
FIG. 2 is an explanatory diagram showing an example of a storage area for storing bodies of electronic mails shown in FIG. 1;
FIG. 3 is an explanatory diagram showing an example of a storage area for storing pieces of unread/already-read information shown in FIG. 1;
FIG. 4 is an explanatory diagram showing an example of a list of unread mails shown in FIG. 1;
FIG. 5 is a diagram showing a display example of a viewer window shown in FIG. 1;
FIG. 6 is a diagram showing an example of a menu screen;
FIG. 7 is an explanatory flowchart showing an operation of the electronic mail device shown in FIG. 1;
FIG. 8 is an explanatory flowchart showing the operation of the electronic mail device shown in FIG. 1;
FIG. 9 is an explanatory flowchart showing the operation of the electronic mail device shown in FIG. 1;
FIG. 10 is an explanatory flowchart showing the operation of the electronic mail device shown in FIG. 1;
FIG. 11 is an explanatory flowchart showing the operation of the electronic mail device shown in FIG. 1;
FIG. 12 is a diagram showing a display example of a mailer window in a second embodiment;
FIG. 13 is a block diagram showing functions of a prior art electronic mail device; and
FIG. 14 is a diagram showing a display example of a mailer window in the prior art.

### [First Embodiment]

### <Whole Architecture of electronic mail device>

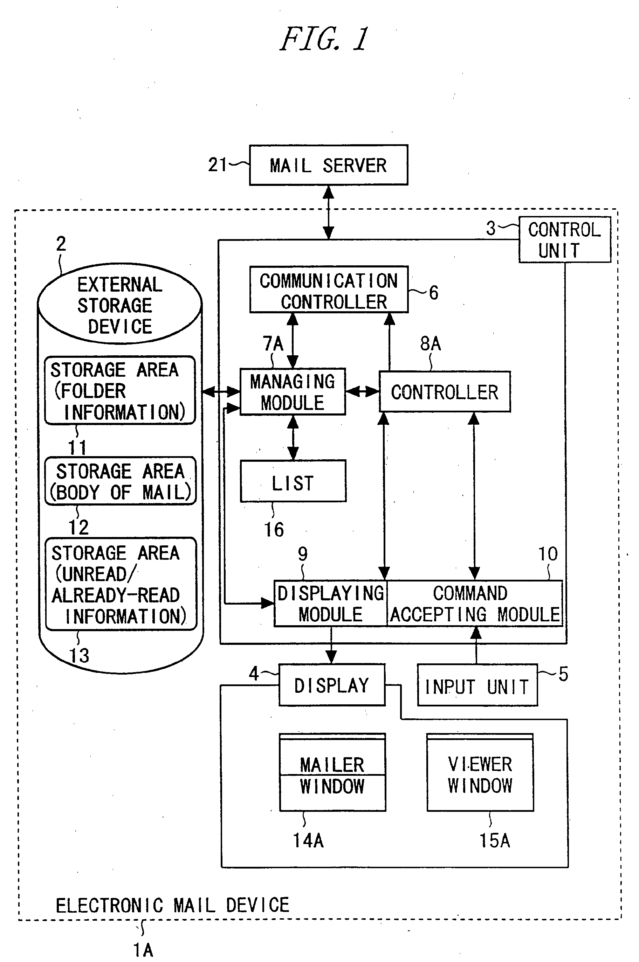

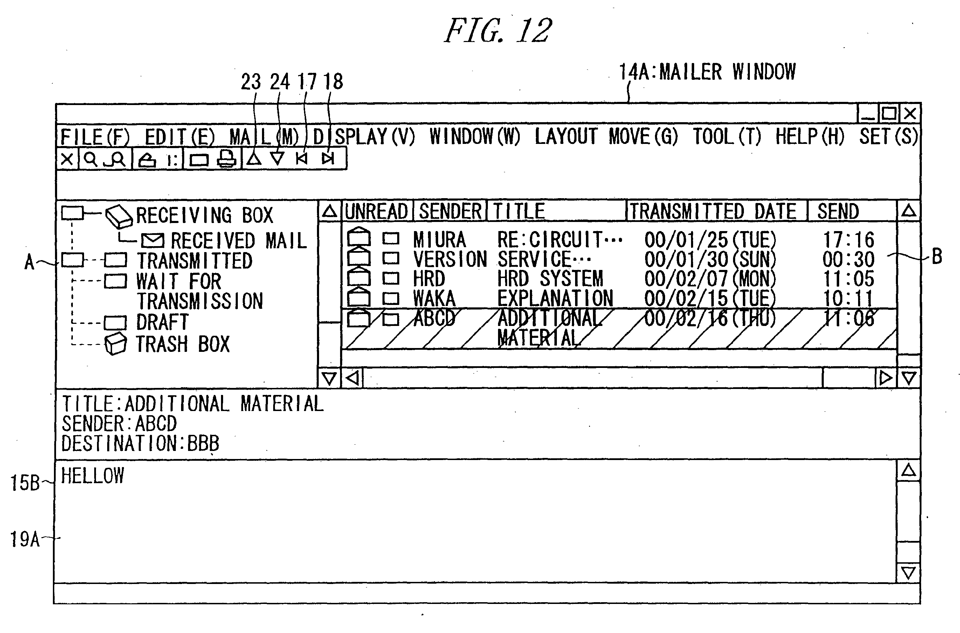

FIG. 1 is a block diagram showing functions of an electronic mail device 1A in a first embodiment. Note that the same components shown in FIG. 1 as those in the prior art illustrated in FIG. 12 are marked with the same numerals as those in FIG. 12.

Referring to FIG. 1, a personal computer (PC) as an information processing device is made to execute a mailing program, i.e. mailer, whereby the electronic mail device 1A is thereby actualized. The electronic mail device 1A functions a mail client in an electronic mail system. The electronic mail device 1A actualizes a browse control method according to the present invention.

The PC includes hardware resources such as a CPU, a ROM, a RAM, a hard disk drive (containing a hard disk), a communication control unit (e.g., a LAN card (LAN board)) etc.

Further, a display 4 using a cathode ray tube (CRT), a liquid crystal display (LCD) etc, and an input unit 5 comprising a keyboard (KB) and a pointing device (PD) such as a mouse, a joy stick a track ball, a flat space etc, are connected to the PC.

The PC is further connected to a computer functioning as a mail server 21 via a communication line. Electronic mail is transmitted and received between the PC and the mail server 21. Note that the mail server 21 is connected to other mail servers accommodating mail clients, via the Internet, and the mail clients are connected to each other via the mail servers. The electronic mails are thereby transmitted and received between the mail clients.

The HDD in the PC serves as an external storage device 2 shown in FIG. 1. The mailer program (including viewer) for making the PC function as the electronic mail device 1A is installed into the external storage device 2.

Moreover, the external storage device 2 has stored a database related to the electronic mail (which is called "mail DB"). The mail DB includes, as in the prior art, a storage area 11 for storing folder information, a storage area 12 for storing bodies of electronic mails, and an storage area 13 for storing unread/already-read information.

The CPU downloads the mailer program stored in the external storage device 2 into the RAM, whereby the CPU and the RAM in the PC function as a control unit 3 of the electronic mail device 1A. The control unit 3 implements communication controller 6, a managing module 7A for managing the mail DB, a controller 8A for controlling a mailer, a displaying controller 9 and a command accepting module 10. Further, an unread mail list 16 is created, as a novel feature of the present invention, on the RAM of the control unit 3.

Note that the display 4 corresponds to a display unit according to the present invention. Further, the external storage device 2 (the storage area 13) corresponds to a retaining unit according to the present invention. Moreover, the managing module 7A corresponds to a management unit according to the present invention. Still further, the managing module 7A, the controller 8A and the display module 9 correspond to a browse control module according to the present invention. In addition, the external storage device 2 and the RAM in the control unit 3 correspond to a recording medium according to the present invention.

### <Architecture of Control Unit>

Next, the components (modules) actualized by the control unit 3 will be explained.

The communication controller 6 controls a process of transmitting and receiving the electronic mail in accordance with communication protocols such as SMTP (Simplelectronic mail Transfer Protocol) , POP3 (Post Office Protocol version 3) etc.

The managing module 7A manages the storing areas 11, 12, and 13 related to the electronic mails retained in the external storage device 2. To be more specific, the managing module 7A writes and reads the folder information, a body of the electronic mail and the read/already-read information to and from the corresponding storage areas 11, 12, and 13. Further, the managing module 7A creates the unread mail list 16 at a predetermined timing.

The controller 8A gives indications corresponding to initialization (mailer program) set in the mailer and to a command received from the command accepting module 10 to the communication controller 6, the managing module 7A, and the displaying module 9, thereby controlling the functions thereof.

The displaying module 9 controls a display control process on the display 4, and displays a mailer window 14A and a viewer window 15A on the display 4.

The command accepting module 10 issues to the controller 8 a command corresponding to an input signal from the input unit 5.

### <Database Related to electronic mail>

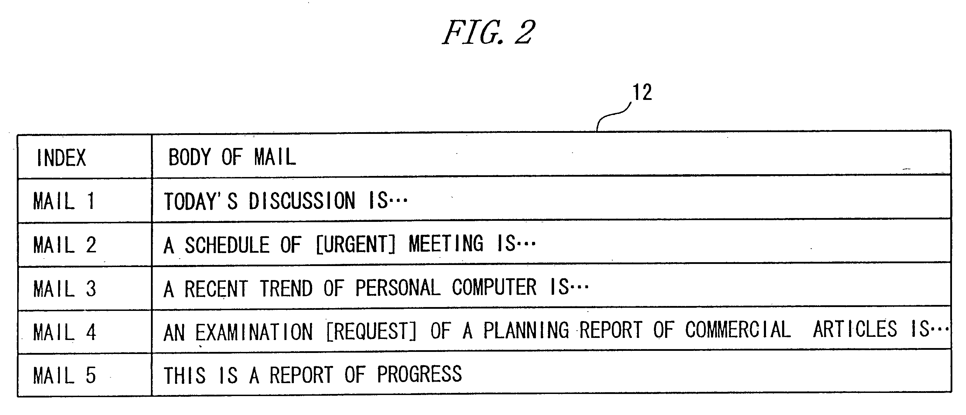

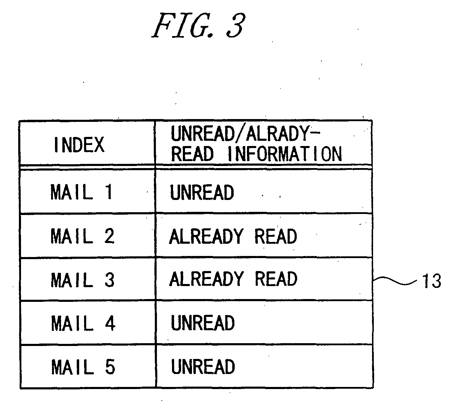

Next, as the database related to the electronic mail, the storage area 11, the storage area 12 and the storage area 13 in the external storage device 2, will be explained. FIG. 2 is an explanatory diagram showing an example of the storage area 12. FIG. 3 is an explanatory diagram showing an example of the storage area 13.

The storage area 11 contains pieces of information stored in a folder (directory) tree, which are to be displayed on the mailer window 14A. The folder tree is configured by a folder (receipt folder) for storing the electronic mails received, a folder (transmission folder) for storing the electronic mails already transmitted, and a folder (transmission standby folder) for storing the electronic mails that are in a standby status for being transmitted.

The storage area 12 is stored with the bodies of the received electronic mails in a table format shown in FIG. 2. The electronic mails are respectively arranged in an ascending or descending order of the received date and time. The electronic mails are allocated with index numbers (mail 1, mail 2,...) each used as a search key of the electronic mail.

The storage area 13 is stored with the unread/already-read information of the received electronic mails in the table format shown in FIG. 3. The storage area 13 is stored with records consisting of an "index number" and a state ("unread" or "already-read") of the electronic mails stored in the storage area 12.

The state of an electronic mail shifts from "unread" to "already-read" when the body of the electronic mail is displayed in a display area 19 in the viewer window 15A.

### <Unread Mail List>

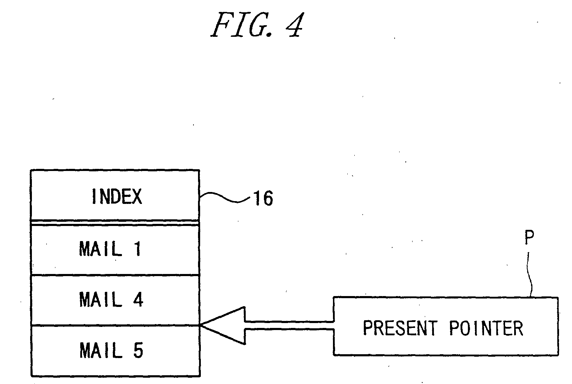

Next, the unread mail list 16 created on the RAM will be described. FIG. 4 is an explanatory diagram showing an example of the unread mail list 16. The unread mail list 16 is created by the managing module 7A when the viewer window 15A is displayed.

The unread mail list 16 stores a list of the index numbers allocated to the electronic mails having the state "unread" when the viewer window 15A is displayed. The index numbers are arranged in the order (e.g., the ascending or descending order of the received date and time) conforming with the sequence of the electronic mails in the storage area 12.

Note that the electronic mails are arranged in the sequence based on the setting by a user or by automatic sort. Namely, the electronic mails are arranged in the order based on the setting by the sort, which is selected from several orders according to transmitted date and time, senders, titles and priorities etc in addition to the received date and time. Then, the unread mail list 16 containing the index numbers is created in the sequence corresponding to the set sort sequence of the electronic mails.

### <Window(screen)>

Next, the windows 14A and 15A displayed by the screen display module 9 on the screen of the display 4, will be explained. The mailer window 14A, which is the same as the mailer window 14 shown in FIG. 14, is displayed. As described above, the display areas A, B and C are displayed in the mailer window 14A.

The folder tree based on the folder information stored in the storage area 11 is displayed in the display area A. The list of the titles (mail names) of the electronic mails stored in the folder selected from the displayed folder tree is displayed in the display area B.

The titles of the electronic mails are displayed as a list in the ascending or descending order of, e.g., the received date and time of the electronic mails, are displayed in the display area B. Further, a symbol for indicating the state ("unread" or "already-read") of the electronic mail is displayed on the left side of the title. The display area C displays a preview of the body of the electronic mail specified at the present in the display area B.

The viewer window 15A is displayed on the display 4 when the electronic mail desired to be referred from the list in the display area B is specified (selected). The electronic mail is selected by manipulating a cursor (not shown) displayed on the display 4 with the input device 5 and thus specifying the title of the desired electronic mail shown in the list.

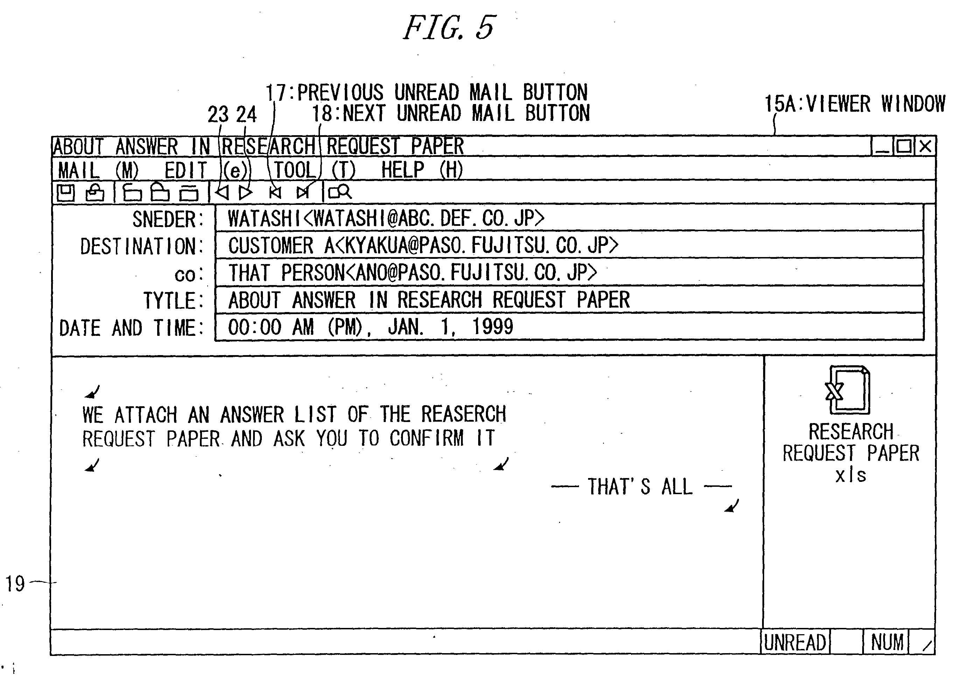

FIG. 5 is an explanatory diagram showing an example of the viewer window 15A. Referring to FIG. 5, the viewer window 15A includes the display area 19 provided on the lower side. The body of the electronic mail selected from the list is displayed in this display area 19. Header information (sender (source address), destination address, and the title (mail name) etc.) of the electronic mail displayed in the display area 19, are displayed in the upper side of the display area 19.

A plurality of icon buttons for the user to input commands of the mailer are provided in the upper side of the header information. The plurality of icon buttons include a "previous mail" button 23 and a "next mail" button 24. Further, the plurality of icon buttons include a "previous unread mail" button (previous unread button) 17 and a."next unread mail" button (next unread button) 18, as novel elements.

The previous mail button 23 is an input button for inputting the command of "previous mail" for displaying the body of the electronic mail corresponding to the previous mail in the display area 19. In a case where its display is set, for example, in the descending order (the electronic mail received on the latest date and time is arranged at the head, and the following discussion will be made in the same way) , the previous mail is an electronic mail that is more recent in terms of its received date and time than the electronic mail displayed at the present in the display area 19, and is stored one before this electronic mail in the storage area 12.

The next mail button 24 is an input button for inputting a command ("next mail" command) of displaying, in the display area 19, the body of the electronic mail that is earlier in terms of its received date and time than the electronic mail displayed at the present in the display area 19 and is stored next to this electronic mail in the body of the electronic mail storage area 12.

The previous unread button 17 is an input button for inputting a command ("previous unread mail" command) of displaying, in the display area 19, the body of the electronic mail that is later in terms of its received date and time than the electronic mail displayed at the present in the display area 19 and is allocated an index number stored in the unread mail list 16.

The next unread button 18 is an input button for inputting a command ("next unread mail" command) for displaying, in the display area 19, the body of the electronic mail that is earlier in terms of its received date and time than the electronic mail displayed at the present in the display area 19 and is given an index number stored in the unread mail list 16.

The respective buttons 17, 18, 23 and 24 can be pushed down by operating the pointing device as the input unit 5. A signal corresponding to the button pushed down is input to the command accept module 10 in the control unit 3.

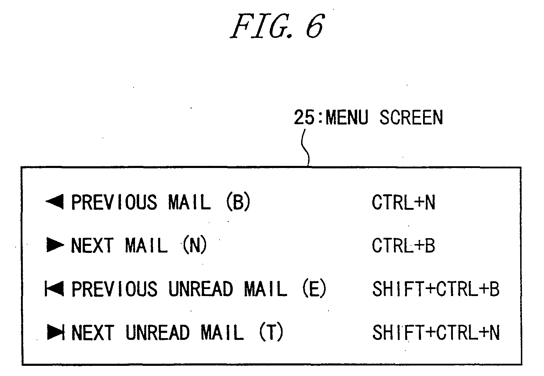

A menu bar is provided above the plurality of icon buttons. "Tool" is provided as one of the menus. When the menu "tool" is specified by the user, a menu screen 25 shown in FIG. 6 is displayed on the display 4.

Command names of "previous mail", "next mail", "previous unread mail", and "next unread mail" are displayed on the menu screen 25. The command of "Previous mail" corresponds to the previous mail button 23 described above, the command of "next mail" corresponds to the next mail button 24. The command of "Previous unread mail" corresponds to the previous unread button 17, and the command of "next unread mail" corresponds to the next unread button 24.

Each of the command names is specified (selected) by operating the keyboard or the pointing device as the input unit 5. When one of the command names is selected, the same signal as in the case where the icon button corresponding to the selected command name is pushed down, is input to the command accept module 10.

This contrivance makes it feasible to utilize the same function as in the case where the user depresses the previous unread button 17 or the next unread button 18 also in the information processing device (computer) having no pointing device such as the mouse etc. Note that the viewer window 15A and the menu screen 25 correspond to an unread mail search screen according to the present invention.

### <Operation of electronic mail Device>

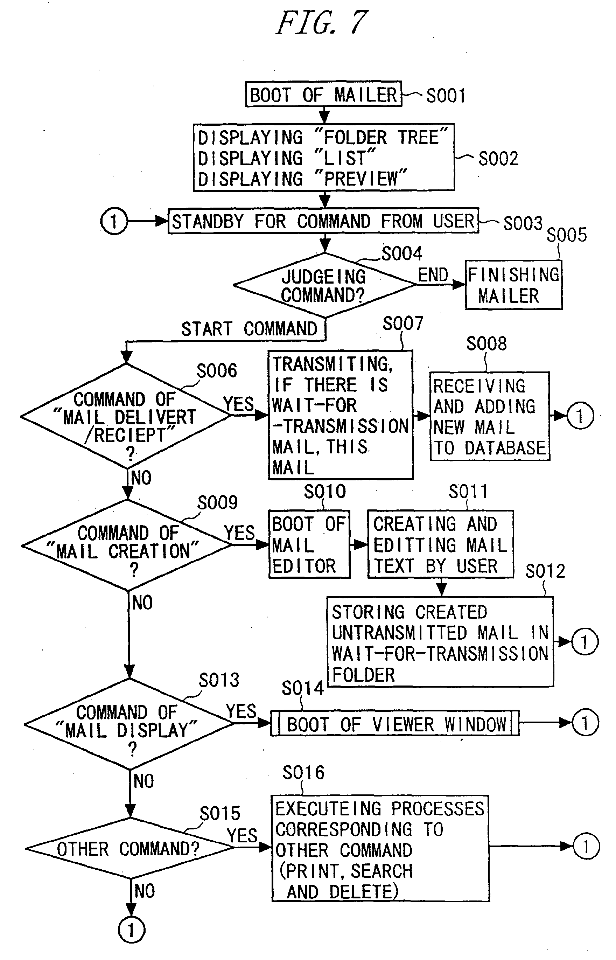

Next, an operation of the electronic mail device 1A shown in FIG. 1 will be explained with a discussion on the processing by the control unit 3. FIGS. 7 through 11 are flowcharts each showing the processing by the control unit 3 shown in FIG. 1.

Note that the titles in the list, the texts of the electronic mails and the index numbers shall be all arranged in the descending order of the received date and time (what is the latest in the received date and time is arranged at the head) in the following discussion. The arrangement order of the index numbers may be, however, arbitrarily changed by the user's changing the setting about the sort.

The flowchart in FIG. 6 shows a main routine of the processing by the control unit 3. This main routine starts when the user inputs a boot command of the mailer to the information processing device by use of the input device 5 (step S001).

In step S002, the mailer window 14A is displayed on the display 4 in accordance with the boot command of the mailer. Namely, the controller 8A indicates the displaying module 9 to display the mailer window 14A (see FIG. 1). Further, the controller 8A indicates the managing module 7A to read the information displayed in each of the display areas A, B and C.

Then, the managing module 7A reads contents stored in the respective storage areas 11, 12, and 13 of the external storage device 2, and supplies these contents to the displaying module 9. Then, the displaying module 9 displays the mailer window 14A shown in FIG. 1. At this time, the body of the electronic mail received last is displayed as a preview in the display area C.

After this, there becomes a standby status for an input of the command from the user (step S003). Then, when the input signal from the input device 5 is input to the command accepting module 10, the command accepting module 10 gives the controller 8A a command corresponding to the input signal.

The controller 8A, when receiving the command from the command accepting module 10, judges what category this command comes under (step S004). At this time, if this command is an end command of the mailer, an end process of the mailer is executed (step S005), and the operation of the electronic mail device 1A comes to an end.

By contrast, if the above command is an effective command, the controller 8A judges whether this command is a command of "mail transmission/receipt" command or not (step S006). If this command is the command of "mail transmission/receipt" (step S006 : Y) , it is judged whether or not there is an electronic mail waiting for being transmitted. If the wait-for-transmission electronic mail exists, this electronic mail is transmitted to the mail server 21 (step S007).

Thereafter, a request for the receipt is transmitted to the mail server 21. The mail server 21 receives the electronic mail transmitted in response to that receipt request, and stores this mail in the database of the external storage device 2 (step S008). At this time, the text of the electronic mail is stored in the storage area 12 and is allocated an index number. Further, the allocated index number and the state of "unread" of the electronic mail are stored in the unread/already-read information storage area 13. Thereafter, the operation goes back to step S003 and becomes a standby status for an input of the command from the user.

The controller 8A, when judging in step S006 that the above command is not the command of "mail transmission/receipt" (step S006; N), further judges whether or not this command is a command of "mail creation" (step S009).

At this time, if the command is the command of "mail creation" (step S009; Y) , the controller 8A boots a mail editor to display a screen for creating an electronic mail for transmitting (not shown) on the display 4 (step S010).

Thereafter, the user creates the body of the electronic mail on the screen, and creates mail data of the electronic mail by specifying pieces of header information (destination etc.) (step S011). After finishing the creation of the mail data, the mail data of this undelivered mail are stored in a wait-for-transmission folder in the external storage device 2 (step S012) . Thereafter, the operation loops back to step 5003 and becomes the standby status for an input of the command from the user.

The controller 8A, when judging in step S009 that the above command is not the command of "mail creation" (step S009; N) , then judges whether or not this command is a command of "mail display" (a boot command of the viewer window 15A) specified (selected) from the received mail list displayed in the mailer window 14A (step S013).

At this time, if the command is the command of "mail display" (step S013; Y), a subroutine of the boot process of the viewer window 15A (step S014). Whereas if not the command of "mail display" (step S013; N), the operation proceeds to step S015.

In step S015, the controller 8A judges whether the command concerned comes under other categories or not. When judging that this command comes under other categories (step S015; Y) , one of processes (print, search, delete etc) corresponding to other commands is executed. Thereafter, the operation loops back to step S003. Whereas if the command concerned does not come under other categories (step S015; N), the operation returns to step S003.

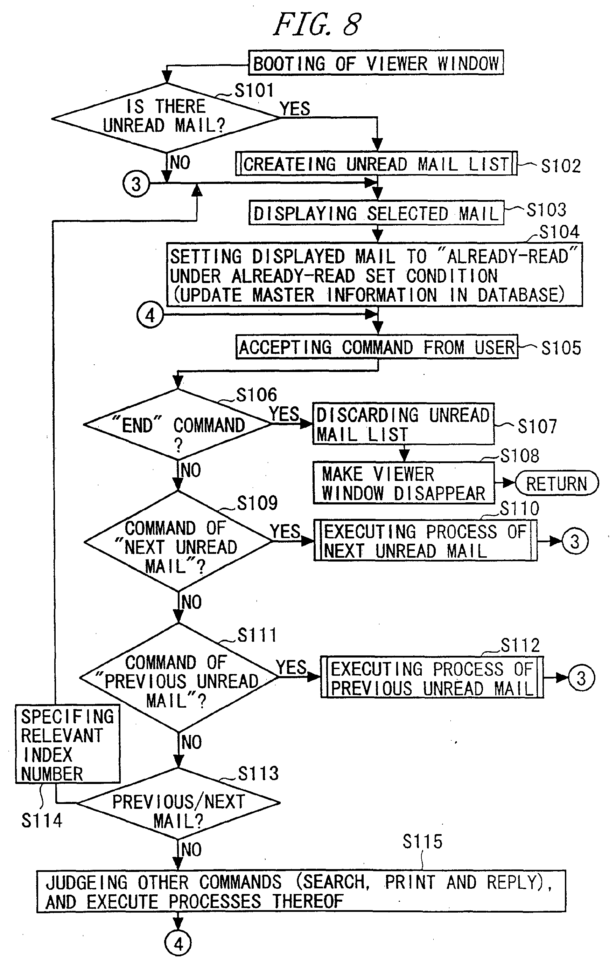

FIG. 8 is a flowchart showing the boot process (step S014) of the viewer window 15A. In the boot process shown in FIG. 8, to begin with, it is judged in step S101 whether or not the received mails include an unread mail. More specifically, the managing module 7A judges whether there is an electronic mail remaining in the state of "unread" (unread mail) or not by searching the unread/already-read information storage area 13. At this time, if the unread mail exists, the processing proceeds to step S102. Whereas if not, the processing goes further to step S103.

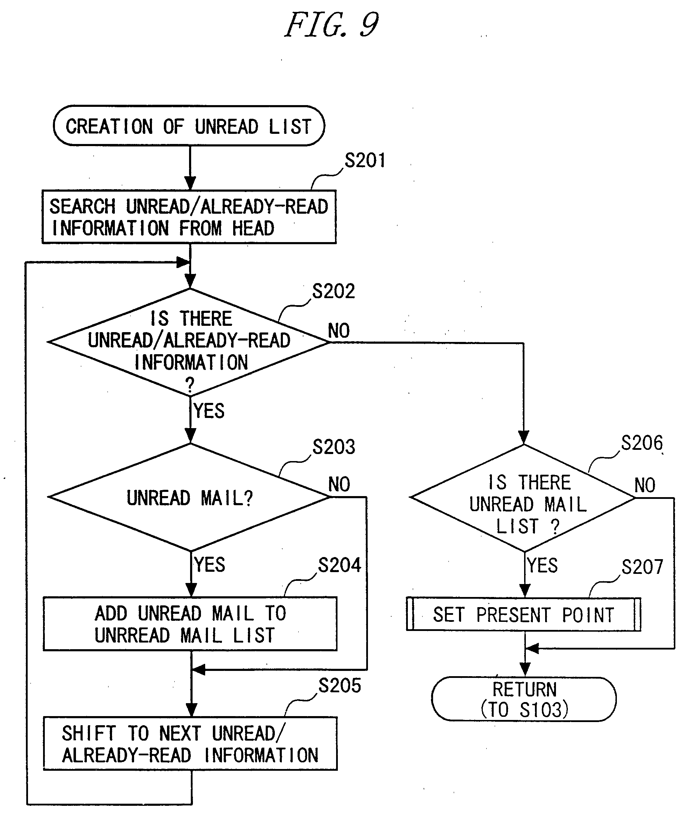

In step S102, a subroutine is a creation process of the unread mail list 16. FIG. 9 is a flowchart showing the creation process of the unread mail list 16. Upon a start of the creation process shown in FIG. 9, the managing module 7A, based on an indication given from the controller 8A, searches a head row (first row) of the unread/already-read field in the storage area 13 (step S201) and thus judges whether or not the head row contains a piece of unread/already-read information (step S202).

At this time, when this row contains the unread/already-read information, the processing proceeds to step S203. Where as if not, the processing diverts to step S206. Note that this subroutine is executed on the premise that the user is to specify the received mail, and hence the head row of the unread/already-read field in the unread/already-read information storage area 13 is invariably stored with the unread/already-read information. Therefore, in step S202 at the first cycle, the processing invariably proceeds to step S203.

In step S203, the managing module 7A judges whether the state of the unread/already-read information referred to at the present time is the state of "unread" or not, thereby judging whether the electronic mail is an unread mail or not. At this time, if the state indicates the state of "unread", the processing proceeds to step S204. Whereas if not (the state of "already-read"), the processing skips over to step S205.

In step S204, the managing module 7A reads, from the unread/already-read information storage area 13, an index number corresponding to the unread/already-read information referred to at the present time, and copies it to the RAM. When the index number is read in the process in step S204 at the second cycle onwards, the read-out index number is copied to a storage location next to the storage location of the index number already copied to the RAM. The unread mail list 16 is thereby created on the RAM. Thereafter, the processing proceeds to step S205.

In step S205, the managing module 7A sets a row (record) next to the row referred to at the present time as a processing target in steps S202, S203 and S204, and returns the processing to step S202. Thus, the unread mail list 16 is created in such a way that the electronic mails each showing the state of "unread" of the unread/already-read information stored in the storage area 13 are picked up, and the index numbers allocated to these unread electronic mails are arranged in the descending order of the received date and time when starting the display process of the body of the electronic mails in the viewer window 15A. The unread mail list 16 may also be created, wherein the index numbers are arranged in sequence based on the user's setting of the sort of the electronic mails other than the descending order of the received date and time.

Then, when the processes in steps S203 and S204 are executed with respect to all pieces of unread/already-read information in the storage area 13, a NO judgement is made in step S202, and the processing diverts to step S206.

In step S206, the managing module 7A judges whether the unread mail list 16 exists, i.e., the list 16 is created or not. If created, the processing goes forward to step S207. Whereas if not, the subroutine in FIG. 9 is ended, and the processing loops back to step S103 shown in FIG. 8.

In step S207, the managing module 7A sets a present pointer P for the unread mail list 16. Namely, the managing module 7A judges whether or not the unread mail list 16 contains an index number of the electronic mail selected by the user. If contained, the present pointer P is set at the index number thereof.

By contrast, if no relevant index number is given, the present pointer P is set to a position according to a predetermined setting. For instance, the present pointer P is set at the top index number or the last index number in the unread mail list 16. When the setting of the present pointer P is finished, the subroutine in FIG. 9 comes to an end, and the processing returns to step S103 shown in FIG. 8.

In step S103, the selected electronic mail is displayed. That is, the controller 8A gives an indication of displaying the viewer window 15A (see FIG. 5) to the displaying module 9, and also gives the managing module 7A the index number of the selected electronic mail and an indication of displaying this electronic mail.

Then, the displaying module 9 displays the viewer window 15A on the display 4. On the other hand, the managing module 7A searches the storage area 12 with the index number used as a key, thus reading the body of the electronic mail concerned and supplying the same text to the displaying module 9. Then, the displaying module 9 displays the body of the electronic mail received from the managing module 7A in the display area 19 for displaying the body of the electronic mail on the viewer window 15A. Thereafter, the processing proceeds to step S104.

In step S104, the state of the electronic mail displayed in the viewer window 15A is set to the state of "already-read" under an already-read setting condition (that "the electronic mail has been displayed in the viewer window 15A").

Namely, the controller 8A supplies the managing module 7A with the index number of the electronic mail selected the indication that the state of this electronic mail be set to the state of "already-read". Then, the managing module 7A searches the storage area 13 (see FIG. 3) with the index number used as a key, and sets the state corresponding to the index number to the state of "already-read".

With this setting, the electronic mail selected by the user becomes the state of "already-read", and the symbol provided on the left side of the tile of the electronic mail displayed in the list of the mailer window 14A, indicates the state of "already-read". Thereafter, the processing proceeds to step S105.

In step S105, there becomes a status of accepting an input of the command from the user. When the command is input, the controller 8A judges whether or not this command is a command of "end" of the display on the viewer window 15A (step S106. In this case, if the above command is the command of "end", the processing proceeds to step S107. Whereas if not, the processing diverts to step S109.

When the processing goes to step S109, the controller 8A judges whether or not the above command is a command of "next unread mail". The command of "next unread mail" is a command occurred by pushing down the next unread button 18 or by specifying a command name of "next unread mail" (see FIG. 6). If the above command is the command of "next unread mail", the processing proceeds to step S110. Whereas if not, the processing goes forward to step S111.

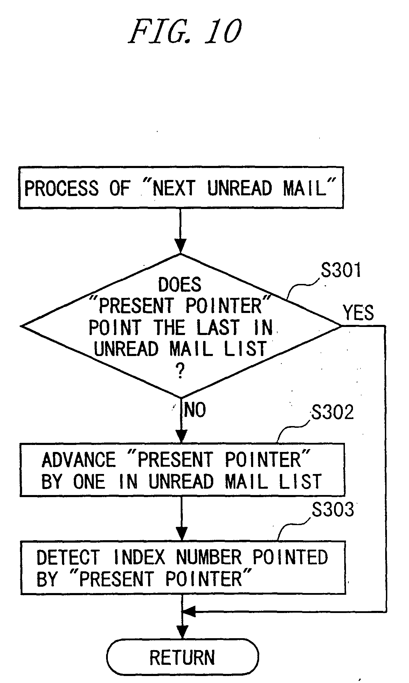

In step S110, the controller 8A gives the managing module 7A an indication for executing the process of "next unread mail" , thereby executing a subroutine of the process of "next unread mail". FIG. 10 is a flowchart showing the process of "next unread mail".

In step S301, the managing module 7A judges whether or not a position pointed by the present pointer P in the unread mail list is the last in the unread mail list 16. If so, the subroutine in FIG. 10 comes to an end, and the processing loops back to step S103 in FIG. 8. Whereas if not, the processing proceeds to step S302.

In step S302, the managing module 7A shifts the position of the present pointer P by one to a next position (downward to the last position) from the present position. Thereafter, the processing goes forward to step S303.

In step S303, the managing module 7A, after detecting the index number pointed now by the present pointer, finishes the subroutine in FIG. 10. Then, the processing returns to step S103 in FIG. 8.

With this return, in the process in step S103 thereafter, the process of displaying the body of the electronic mail given the index number detected in step S303, is executed, whereby the body of the electronic mail concerned is displayed in the display area 19 in the viewer window 15A.

Note that when the position pointed by the present pointer P in the unread mail list 16 is judged to be the last in step S301, the subroutine is finished in the process shown in FIG. 10, however, there may be taken such a setting that if judged YES in step S301, the present pointer P points the top position in the unread mail list 16 and the processing shifts to step S303. With this setting, the electronic mails shown in the unread mail list 16 can be cyclically displayed.

When the processing proceeds to step S111, the controller 8A judges whether or not the command concerned is a command of "previous unread mail". The command of "previous unread mail" is a command occurred by depressing the previous unread button 17 (see FIG. 5) or by specifying a command name of "previous unread mail" (see FIG. 6). If the above command is the command of "previous unread mail" , the processing proceeds to step S112. Whereas if not, the processing goes forward to step S113.

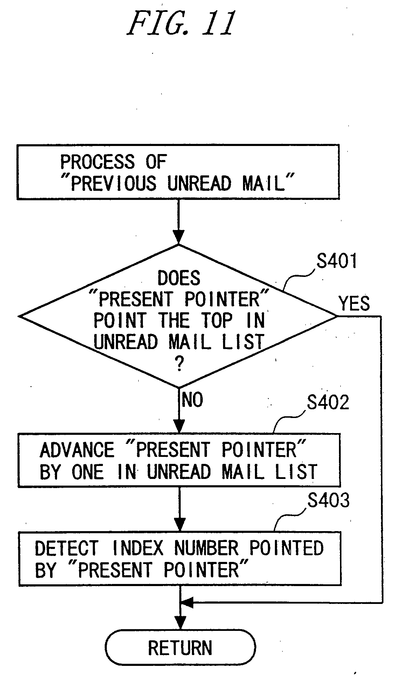

In step S112, the controller 8A gives the managing module 7A an indication of executing the process of "previous unread mail", thereby executing a subroutine of the process of "previous unread mail". FIG. 11 is a flowchart showing the process of "previous unread mail".

In step S401, the managing module 7A judges whether or not a position pointed by the present pointer P in the unread mail list is the top in the unread mail list 16. If so, the subroutine in FIG. 11 comes to an end, and the processing loops back to step S103 in FIG. 8. Whereas if not, the processing proceeds to step S402.

In step S402 , the managing module 7A advances the position of the present pointer P to a position one before (toward the top) from the present position. Thereafter, the processing goes forward to step S403.

In step S403, the managing module 7A, after detecting the index number pointed now by the present pointer, finishes this subroutine. Then, the processing returns to step S103 in FIG. 8.

With this return, in the process in step S103 thereafter, the process of displaying the text of the electronic mail given the index number detected in step S403, is executed, whereby the body of the electronic mail concerned is displayed in the display area 19 in the viewer window 15A.

Note that when the position pointed by the present pointer P in the unread mail list 16 is judged to be the top in step S401, the subroutine is finished in the process shown in FIG. 11. However, there may be taken such a setting that if judged YES in step S401, the present pointer P points the last position in the unread mail list 16 and the processing shifts to step S403. With this setting, the electronic mails shown in the unread mail list 16 can be cyclically displayed.

When the processing proceeds to step S113 in FIG. 8, it is judged if the command input by the user is either the command of "next mail" or "previous mail". If judged to be either the command of "next mail" or "previous mail" command, the processing goes forward to step S114. Whereas if not, the processing proceeds to step S115.

In step S114, an index number allocated to the electronic mail corresponding to the "next mail" or "previous mail", is specified. Thereafter, the processing goes back to step S103, and the process of displaying the body of the electronic mail of the electronic mail corresponding to the index number specified in step S114, is executed.

In step S115, it is judged that the command input by the user comes under other categories excluding the command of "end", the command of "next unread mail" and the command of "previous unread mail". Then, this command is specified, and, after a process (one of search, print, reply etc.) corresponding to this command has been executed, the processing returns to step S105.

Thereafter, when the user inputs the command "end" of the viewer window 15A, a YES judgement is made in step S106, and the processing advances to step S107. In step S107, the managing module 7A discards (deletes) the unread mail list 16 in accordance with an indication given from the controller 8A.

In step S108, the displaying module 9 makes the viewer window 15A disappear from the display 4 in accordance with an indication given from the controller 8A. Thereafter, the subroutine (step S104) of the boot process of the viewer window 15A comes to an end, and the processing loops back to step S003 in FIG. 7.

### <Operation of First Embodiment>

In the electronic mail device 1A according to the first embodiment, when the user searches the list of the received mails in the mailer window 14A and thus selects the received mail (inputs the command of "mail display" for displaying this received mail) that should be displayed, the viewer window 15A is displayed, and the body of the electronic mail of the received mail selected is displayed in the display area 19.

Further, the detection of the index number corresponding to the state of "unread" in the storage area 13, is triggered by inputting the command of "mail display", and the unread mail list 16 is thus created. The body of the electronic mail is displayed in the display area 19, whereby the state of the mail in the unread/already-read information storage area 13 shifts from the state of "unread" to the state of "already-read".

On the other hand, when the user inputs the command of "next unread mail" or the command of "previous unread mail" by use of the buttons 17, 18 on the viewer window 15A or by use of the menu screen 25, the relevant electronic mail is searched from the unread mail list 16, and the electronic mail searched is displayed in the display area 19.

Thus, when the user inputs the command of "next unread mail" or the command of "previous unread mail", the relevant electronic mail is searched not by use of the unread/already-read information in the storage area 13 but from the unread mail list 16.

The contents of the unread mail list 16 do not change due to a fulfillment of the already-read setting condition (the display of the body of the electronic mail) , and the unread mail list 16 continues to be effective till the viewer window 15A is closed (disappear from the screen).

Therefore, unless the user inputs the command of "end" of the viewer window 15A, the user is able to repeatedly display, in the display area 19, only the mail unread when inputting the command of "mail display" by use of the command of "previous unread mail" or the command of "next unread mail".

With this contrivance, it is feasible to obviate such a problem that the electronic mail device 1 as the prior art searches the "next unread mail" on the basis of the unread/already-read information in the unread/already-read information storage area 13, the state of the electronic mail thereby shifts from the state of "unread" to the state of "already-read" due to the display of the body of the electronic mail in the viewer window 15A with the result that a desired mail text can not be redisplayed by the command of "next unread mail", and it becomes time-consuming to make the search for redisplaying the body of the electronic mail displayed once by the user.

Accordingly, in the case where the user refers to the plurality of electronic mails remaining in the state of "unread" at one time, even when the user's request is as in the description of the prior art, the desired electronic mail can be easily again referred to. That is effective especially in the case where the user wishes to refer again to the electronic mail deemed important, after looking through a larger number of electronic mails received at one time.

### <Modified Example>

Note that the condition (the condition for setting a state of "already-read" ) as a condition set in the first embodiment under which the state of the electronic mail in the unread/already-read information shifts, is that " the body of the electronic mail be displayed in the viewer window 15A". Substitutes for this condition may also be that "a predetermined time should elapse since the body of the electronic mail has been displayed in the viewer window 15A", or that "the body of the electronic mail be displayed inclusively of its last line in the viewer window 15A.

Further, the mailer window 14A having the display area C for previewing the body of the electronic mail is disclosed in the first embodiment, however, the present invention can be applied to an electronic mail device in which the mailer window 14A having no such display area C is displayed.

### [Second Embodiment]

Next, the electronic mail device in a second embodiment of the present invention will be described. The second embodiment has points in common with the first embodiment, and hence the discussion will be focused on only different points.

FIG. 12 is a diagram showing the mailer window 14A in the second embodiment. A viewer window 15B is provided in a lower area of the mailer window 14A. Thus, in the second embodiment, the mailer window 14A embraces the viewer window 15B in a way of being viewed as one integrated window.

The viewer window 15B has a mail text display area 19A. When a command of "mail text display" for displaying the received mail selected from the list displayed in a list display area B is input, the body of the electronic mail concerned is read from the body of the storage area 12 and displayed in the display area 19A. That is, the body of the electronic mail is not displayed in the display area 19A till the command of "mail display" is input.

Further, a plurality of icon buttons for inputting the commands are provided in an upper area of the mailer window 14A. The plurality of icon buttons include the previous unread button 17, the next unread button 18, the previous mail button 23 and the next mail button 24 which have been explained in the first embodiment. The functions occurred by depressing the buttons 17, 18, 23 and 24 are the same as those in the first embodiment.

The operation (the processes executed by the control unit 3) of the electronic mail device in the second embodiment is substantially the same as the first embodiment operates on. A process in step S014 (see FIGS. 7 and 8), however, is not that the viewer window 15A is displayed separately from the mailer window 14A as done in the first embodiment, but that the received mail selected is displayed in the viewer window 15B.

Further, the mailer window 14A and the viewer window 15B are configured as one integrated window, and hence a command for closing the mailer window 14A is common to a command for closing the viewer window 15B. Namely, only a command of "end" of the mailer is provided in the second embodiment.

Accordingly, a process in step S106 (see FIG. 8) in the second embodiment is to judge whether or not the command input from the user is coincident with the command of "end". If judged to be YES, after finishing the process in step S107, the end process (step S005) of the mailer is executed instead of the process in step S108.

Therefore, in accordance with the second embodiment, the creation of the unread mail list 16 is triggered by displaying the body of the electronic mail in the display area 19A, and an effective period of the unread mail list 16 expires at the end of the mailer since an end of the creation of the list 16.

An command of "end" for finishing the display of the body of the electronic mail in the display area 19A may, however, be provided separately from the command of "end". In this case, the process in step S108 involves executing a process of erasing the body of the electronic mail displayed in the display area 19A. In this case, the effective period of the unread mail list 16 extends to the end of the display of the body of the electronic mail in the display area 19A from the end of the creation of the list 16.

Substantially the same effects as those in the first embodiment can be obtained also in the second embodiment. Note that the second embodiment has exemplified the case of providing no preview display area as in the mailer window 14A. A mode as a substitute for this may be such that the viewer window 15B in the second embodiment is used as the preview display area, a predetermined mail text is automatically displayed in the preview display area when booting the mailer, and, when the command of "mail display" is input, the same window as the viewer window 15A explained in the first embodiment is displayed. In this case, however, the unread mail list 16 is created when booting the mailer, and the effective period of the unread mail list 16 expires at the end of the mailer since the end of the creation of the list 16.

In the discussion made so far, the state information "already-read" or "unread" is set for all the mails managed by the mailer. The present invention can be, however, actualized with a modification of the second embodiment by having the information on only the "already-read" or "unread" mails.

## Claims

1. A device for reading electronic mails, the device comprising:
a storing unit for storing unread/already-read information corresponding to each of a plurality of received electronic mails;
a managing unit for managing an electronic mail, and setting for the mail the state of "unread" at a predetermined timing; and
a controller for controlling a management of reading of the electronic mail having the state of "unread", managed by said managing unit.

2. A device according to claim 1, wherein said storing unit stores state information indicating a state of "unread" or "already-read" of a corresponding electronic mail as the unread/already-read information,
said managing unit creates a list in which an electronic mail of which the corresponding state information stored in said storing unit at the predetermined timing indicates the state of "unread" is registered; and
said controller executes a process for displaying a registered electronic mail in said list on a display according to a request for reading the registered electronic mail.

3. A device according to claim 2, wherein said controller specifies the mail corresponding to the request by use of said list, and displays a body of the specified electronic mail on said display.

4. A device according to any of claims 1 to 3, further comprising a display controller displaying a screen for searching the electronic mail managed by said managing unit on said display.

5. A device according to claim 4, wherein said list holds information of the plurality of registered electronic mails in predetermined sort order;
a pointer is set at any one of the information in said list; and
said display controller displays the screen for searching an electronic mail registered next to the registered electronic mail corresponding to the information pointed by the pointer and/or a previous electronic mail of the registered electronic mail corresponding to the information pointed by the pointer.

6. A device according to any of claims 1 to 5, wherein the predetermined timing is a time point of which reading the body of the electronic mail is requested.

7. A device according to claim 2, wherein said managing unit deletes said list on the basis of a request for an end of reading the electronic mail.

8. A storage medium readable by a computer, tangibly embodying a program executable by the computer to perform a method for causing the computer to function as device for reading electronic mails, the method comprising the steps of:
storing unread/already-read information corresponding to each of a plurality of received electronic mails;
managing an electronic mail and setting for the mail the state of "unread" at a predetermined timing; and
controlling a management of reading of the electronic mail having the state of "unread", managed by said second step.

9. A storage medium according to claim 8, wherein said storing step stores state information indicating a state of "unread" or "already-read" of a corresponding electronic mail as the unread/ already-read information,
said managing step creates a list in which an electronic mail of which the corresponding state information stored in said storing step at the predetermined timing indicates the state of "unread" is registered; and
said controlling step executes a process for displaying a registered electronic mail in said list on a display according to a request for reading the registered electronic mail.

10. A storage medium according to claim 9, wherein said controlling step specifies the mail corresponding to the request by use of said list, and displays a body of the specified electronic mail on said display.

11. A storage medium according to any of claims 8 to 10, further comprising displaying a screen for searching the electronic mail managed by said managing step on said display.

12. A storage medium according to claim 11, wherein said list holds information of the plurality of registered electronic mails in predetermined sort order,
a pointer is set at any one of the information in said list,
said displaying step displays the screen for searching an electronic mail registered next to the registered electronic mail corresponding to the information pointed by the pointer and/or a previous electronic mail of the registered electronic mail corresponding to the information pointed by the pointer.

13. A storage medium according to any of claims 8 to 12, wherein the predetermined timing is a time point of which reading the body of the electronic mail is requested.

14. A storage medium according to claim 9, wherein said second step deletes said list on the basis of a request for an end of reading the electronic mail.

15. A method for controlling the reading of electronic mails, comprising:
storing unread/already-read information corresponding to each of a plurality of received electronic mails;
managing an electronic mail and setting for the mail the state of "unread" at a predetermined timing; and
controlling a management of reading of the electronic mail having the state of "unread", managed by said second step.

16. A method according to claim 15, wherein said storing step stores state information indicating a state of "unread" or "already-read" of a corresponding electronic mail as the unread/already-read information,
said managing step creates a list in which an electronic mail of which the corresponding state information stored in said storing step at the predetermined timing indicates the state of "unread" is registered; and
said controlling step executes a process for displaying a registered electronic mail in said list on a display according to a request for reading the registered electronic mail.

17. A method according to claim 16, wherein said controlling step specifies the mail corresponding to the request by use of said list, and displays a body of the specified electronic mail on said display.

18. A method according to any of claims 15 to 17, further comprising displaying a screen for searching the electronic mail managed by said managing step on said display.

19. A method according to claim 18, wherein said list holds information of the plurality of registered electronic mails in predetermined sort order,
a pointer is set at any one of the information in said list,
said displaying step displays the screen for searching an electronic mail registered next to the registered electronic mail corresponding to the information pointed by the pointer and/or a previous electronic mail of the registered electronic mail corresponding to the information pointed by the pointer.

20. A method according to any of claims 15 to 19, wherein the predetermined timing is a time point of which reading the body of the electronic mail is requested.

21. A method according to claim 16, wherein said second step deletes said list on the basis of a request for an end of reading the electronic mail.
